# EUROPEAN PATENT APPLICATION

(11) **EP 3 694 221 A1**
(43) Date of publication of application: **12.08.2020**
(21) Application number: 18864025.4
(22) Date of filing: 20.08.2018
(51) Int. Cl.: H04R 1/10, H04M 1/00, H04R 9/02, H04R 25/00

(54) **SOUND OUTPUT DEVICE, EARPHONE, HEARING AID, AND MOBILE TERMINAL DEVICE**

(30) Priority: 04.10.2017 JP 2017194094
(71) Applicant: Panasonic Intellectual Property Management Co., Ltd., Osaka-shi, Osaka 540-6207 (JP)
(72) Inventor: KOSUDA, Kazuyuki, Osaka-shi, Osaka 540-6207 (JP); MATSUO, Yuji, Osaka-shi, Osaka 540-6207 (JP); KOBAYASHI, Yuichi, Osaka-shi, Osaka 540-6207 (JP); MAKINO, Yasuhiro, Osaka-shi, Osaka 540-6207 (JP)
(74) Representative: Vigand, Philippe
(86) International application number: PCT/JP2018/030615
(87) International publication number: WO 2019/069568

(57) **Abstract**

A sound output device (1) includes a loudspeaker (10) including a diaphragm (11), a loudspeaker back space (110) located behind the loudspeaker (10) on a side opposite to a diaphragm (11), and a cable (105) which is electrically connected to the loudspeaker (10) and extends from the inside of the loudspeaker back space (110) to the outside. The loudspeaker (10) includes a diaphragm back space (31) located in the back of the diaphragm (11) on a side opposite to the sound radiating direction, and a sound hole (30) having a first opening (30a) opened to the diaphragm back space (31) and a second opening (30b) opened to the loudspeaker back space (110). When viewed from the first opening (30a) toward the second opening (30b), the cable (105) inside the loudspeaker back space (110) is disposed outside the region of the sound hole (30).

## Description

### TECHNICAL FIELD

The present disclosure relates to sound output devices, earphones, hearing aids, and mobile terminal devices.

### BACKGROUND ART

A demand for sound output devices mounted on mobile terminal devices or earphones has been increasing with recent spread of mobile terminal devices such as smartphones. For example, PTL 1 discloses an earphone including a loudspeaker, and a sound hole which penetrates through the loudspeaker. Through the sound hole, the space on the rear surface side with respect to the diaphragm of the loudspeaker is in communication with the space on the rear surface side of the loudspeaker.

### Citation List

### Patent Literature

PTL 1: Japanese Patent No. 6136016

### SUMMARY OF THE INVENTION

### TECHNICAL PROBLEMS

The air inside the sound hole vibrates with the diaphragm to generate a reciprocating air flow. In the earphone disclosed in PTL 1, the sound pressure frequency properties of the earphone may be unintentionally affected by the air flow which undergoes interference with an obstacle such as a cord disposed in the outlet of the sound hole.

The present disclosure provides a sound output device, an earphone, a hearing aid, and a mobile terminal device which improve sound pressure frequency properties.

### SOLUTIONS TO PROBLEMS

The sound output device according to a non-limiting exemplary aspect of the present disclosure includes a loudspeaker including a diaphragm; a loudspeaker back space located behind the loudspeaker on a side opposite to the diaphragm; and a cable which is electrically connected to the loudspeaker and extends from an inside of the loudspeaker back space to an outside. The loudspeaker includes a diaphragm back space located in a back of the diaphragm on a side opposite to a sound radiating direction, and a hole having a first opening opened to the diaphragm back space and a second opening opened to the loudspeaker back space; and when viewed from the first opening toward the second opening, the cable inside the loudspeaker back space is disposed outside a region of the hole.

The earphone according to a non-limiting exemplary aspect of the present disclosure includes the sound output device.

The hearing aid according to a non-limiting exemplary aspect of the present disclosure includes the sound output device.

The mobile terminal device according to a non-limiting exemplary aspect of the present disclosure includes the sound output device.

### ADVANTAGEOUS EFFECT OF INVENTION

The technique according to the present disclosure can improve the sound pressure frequency properties.

### BRIEF DESCRIPTION OF DRAWINGS

FIG. 1 is a schematic perspective view of one example of an earphone including a sound output device according to an embodiment.
FIG. 2 is a schematic exploded perspective view of the earphone illustrated in FIG. 1.
FIG. 3 is a schematic cross-sectional side view of a cross-section of the earphone illustrated in FIG. 1 when viewed in direction III, the cross-section being taken along a line from an ear piece through a cable to a back cover.
FIG. 4 is a schematic perspective cross-sectional view of the earphone illustrated in FIG. 1, where the same cross-section as that in FIG. 3 is cut out.
FIG. 5 is a schematic perspective cross-sectional view of a cross-section of the earphone illustrated in FIG. 1 orthogonal to the cross-section in FIG. 3 when viewed in direction V, where the cross-section is cut out.
FIG. 6 is a schematic cross-sectional view illustrating one example of a cross-sectional configuration of the cable.
FIG. 7 is an enlarged schematic cross-sectional side view of the loudspeaker illustrated in FIG. 3.
FIG. 8 is a diagram of the earphone in FIG. 5 illustrated upside down.
FIG. 9 is a diagram illustrating the sound pressure frequency properties in Example and Comparative Example.
FIG. 10 is a schematic view illustrating one example of a hearing aid including the sound output device according to the embodiment.
FIG. 11 is a schematic view illustrating one example of a mobile terminal device including the sound output device according to the embodiment.

### DESCRIPTION OF EXEMPLARY EMBODIMENTS

In the examination of a compact and high-performance sound output device, the present inventors have examined a configuration of a loudspeaker having a sound hole as in the earphone according to PTL 1 described in "Background Art". Usually, the air on the rear surface side of the diaphragm in the loudspeaker vibrates with the diaphragm to undergo compression or expansion. The air which undergoes compression or expansion may affect the operation of the diaphragm. However, as in the earphone according to PTL 1, the sound hole disposed in the earphone increases the volume of the space on the rear surface side with respect to the diaphragm to reduce a change in pressure in the space. As a result, the influence above is relatively reduced.

In the process of examining the configuration of the earphone described in PTL 1, the present inventors have found a problem that a desired relation between the sound pressure and the frequency of the diaphragm, i.e., desired sound pressure frequency properties are not obtained. The present inventors, who have examined its cause, have found that an obstacle, such as a cord disposed near the outlet of the sound hole on a side opposite to the diaphragm, may affect the sound pressure frequency properties. The air inside the sound hole reciprocally moves with the vibration of the diaphragm, and part of the air comes in and out of the sound hole. However, if any obstacle is present near the outlet of the sound hole, the air coming in and out of the sound hole undergoes interference with the obstacle, and the pressure of the air inside the sound hole is affected. This influence varies in many ways according to the frequency of the diaphragm, leading to difficulties in implementing desired sound pressure frequency properties.

The outlet of the sound hole may be covered with a porous damping member to prevent excessive vibration of the air on the rear surface side with respect to the diaphragm. In such a configuration, a jet flow passing through the damping member is generated with the vibration of the air inside the sound hole. The pressure of the air inside the sound hole is also affected by this jet flow which undergoes interference with an obstacle, and desired sound pressure frequency properties are not obtained. The present inventors then have devised the following technique to improve the sound pressure frequency properties.

The sound output device according to one aspect of the present disclosure includes a loudspeaker including a diaphragm; a loudspeaker back space located behind the loudspeaker on a side opposite to the diaphragm; and a cable which is electrically connected to the loudspeaker and extends from an inside of the loudspeaker back space to an outside. The loudspeaker includes a diaphragm back space located in a back of the diaphragm on a side opposite to a sound radiating direction, and a hole having a first opening opened to the diaphragm back space and a second opening opened to the loudspeaker back space; and when viewed from the first opening toward the second opening, the cable inside the loudspeaker back space is disposed outside a region of the hole.

According to this aspect, the vibration of the diaphragm causes the air inside the hole to vibrate and repeatedly come in and out of the loudspeaker back space. Because the cable inside the loudspeaker back space is disposed outside the region of the hole, the outflow air into the loudspeaker back space is allowed while the interference of the air with the cable is prevented. Thereby, a change in pressure of the air inside the hole caused by the interference of the outflow air with the cable is prevented, enabling a reduction in influences over the vibration of the diaphragm by the change in pressure. Accordingly, the sound output device can have improved sound pressure frequency properties.

The sound output device according to one aspect of the present disclosure may further include a wall which forms the loudspeaker back space with the loudspeaker. The wall may have a wall hole which is opened facing the second opening and through which the loudspeaker back space is in communication with the outside, and when viewed from the first opening toward the second opening, the cable may be disposed outside a region of the wall hole.

According to this aspect, the outflow air from the hole into the loudspeaker back space smoothly flows through the wall hole to the outside of the loudspeaker back space. Thus, the change in pressure of the air inside the hole, which is caused by the interference of the outflow air into the loudspeaker back space, is prevented.

In the sound output device according to one aspect of the present disclosure, when viewed from the first opening toward the second opening, one of the region of the hole and the region of the wall hole may be contained within the other of the region of the hole and the region of the wall hole.

According to this aspect, the air can efficiently flow from the hole to the wall hole. Thus, the interference of the outflow air from the hole to the loudspeaker back space is prevented.

In the sound output device according to one aspect of the present disclosure, the cable may be disposed inside the loudspeaker back space so as to extend from the loudspeaker in a direction along the hole.

According to this aspect, the cable inside the loudspeaker back space is readily disposed outside the region of the hole. Moreover, the region inside the loudspeaker back space where the cable occupies can be reduced, thus increasing the volume of the air inside the loudspeaker back space. As a result, the variation in pressure of the loudspeaker back space during vibration of the air inside the hole is reduced, thus reducing influences over the air inside the hole caused by the air inside the loudspeaker back space.

In the sound output device according to one aspect of the present disclosure, the loudspeaker may include a magnet which surrounds the hole; a first member which surrounds the hole and is magnetically coupled to a first magnetic pole of the magnet a second member which surrounds the hole and is magnetically coupled to a second magnetic pole of the magnet; and a voice coil which surrounds the hole and is connected to the diaphragm. The voice coil may be disposed in a magnetic gap defined between a first facing portion of the first member and a second facing portion of the second member which faces the first facing portion.

According to this aspect, the hole is formed so as to penetrate through the first member, the second member, and the magnet. Thus, an efficient arrangement of the hole, the first member, the second member, the magnet, and the voice coil is enabled, resulting in a size reduction of the loudspeaker.

In the sound output device according to one aspect of the present disclosure, the loudspeaker may further include a magnetic fluid disposed between the voice coil and at least one of the first facing portion and the second facing portion.

According to this aspect, the magnetic fluid stably holds the voice coil, which vibrates, with respect to at least one of the first member and the second member. Thus, the sound quality of the loudspeaker can be improved.

In the sound output device according to one aspect of the present disclosure, the loudspeaker may include a circuit substrate which surrounds the hole and is electrically connected to the voice coil and the cable.

According to this aspect, the hole is formed so as to penetrate through the circuit substrate. Thus, an efficient arrangement of the circuit substrate in the loudspeaker is enabled, resulting in a size reduction of the loudspeaker.

The earphone according to one aspect of the present disclosure includes the sound output device. According to this aspect, the same effect as that of the sound output device according to one aspect of the present disclosure is obtained.

The hearing aid according to the one aspect of the present disclosure includes the sound output device. According to this aspect, the same effect as that of the sound output device according to one aspect of the present disclosure is obtained.

The mobile terminal device according to one aspect of the present disclosure includes the sound output device. According to this aspect, the same effect as that of the sound output device according to one aspect of the present disclosure is obtained.

### EMBODIMENTS

The sound output device according to embodiments of the present disclosure will now be specifically described with reference to the drawings. The embodiments described below are all comprehensive or illustrative as specific examples. Numeric values, shapes, components, arrangements and positions of the components, connection forms, steps, and orders of steps described in the following embodiments are examples, and should not be construed as limitations to the present disclosure. Moreover, among the components of the embodiments below, the components not described in an independent claim representing the most superordinate concept of the present disclosure will be described as arbitrary components. In the description of the embodiments below, expressions including "approximately", such as approximately parallel or approximately orthogonal, are used in some cases. For example, the expression "approximately parallel" means not only that it is completely parallel, but also that it is substantially parallel, in other words, it includes a difference of about several percent. The same applies to other expressions including "approximately". The drawings are schematic views, and are not always strictly drawn. Furthermore, in the drawings, identical referential numerals are given to substantially identical components, and the duplication of the description will be omitted or simplified in some cases.

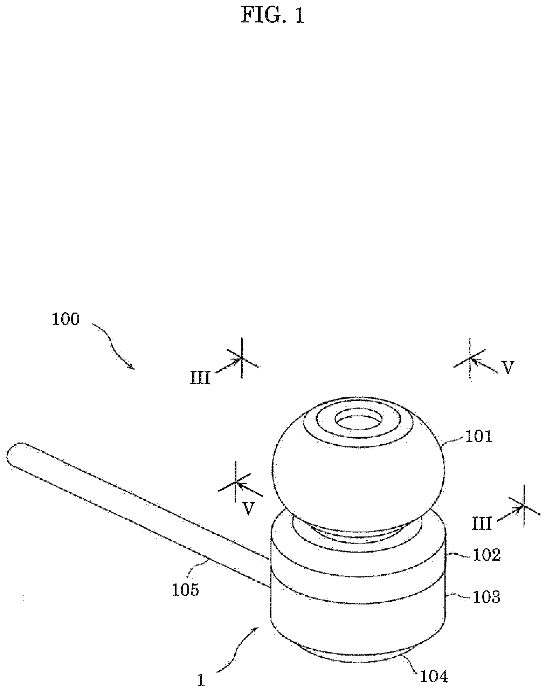

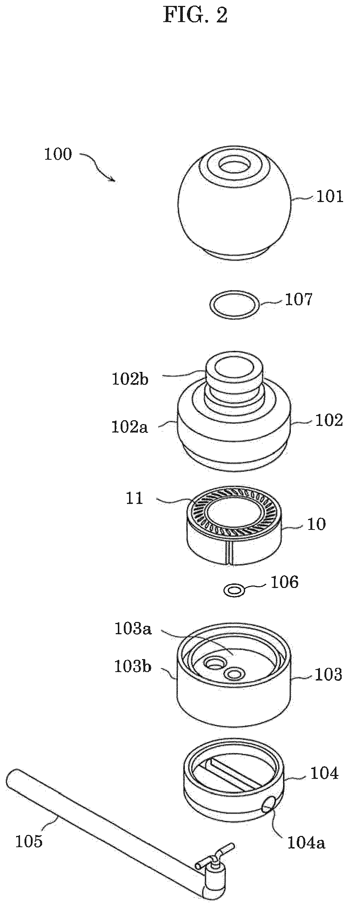

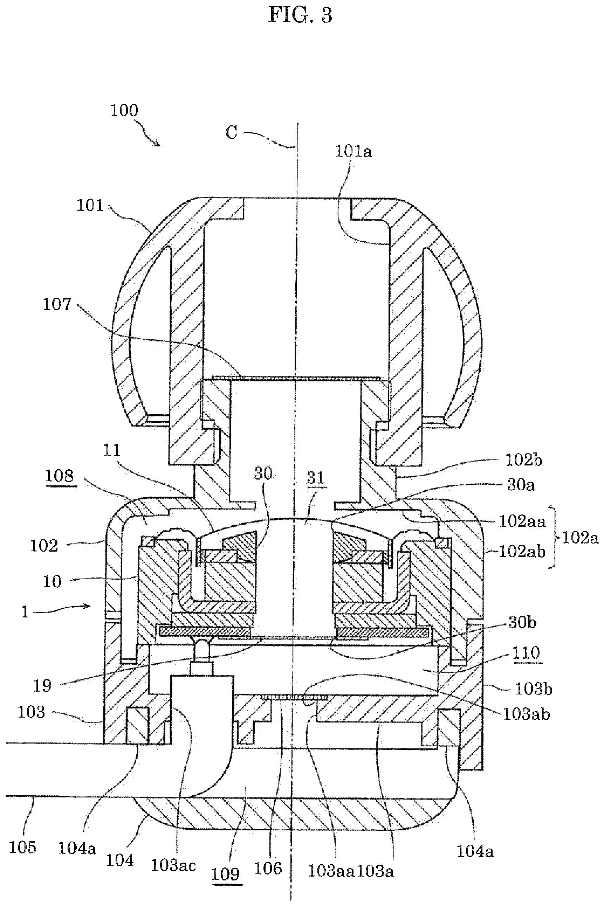

Sound output device 1 according to an embodiment will now be described. In the present embodiment, an example of sound output device 1 mounted on an earphone will be described. For example, FIG. 1 illustrates a schematic perspective view of one example of an earphone including sound output device 1 according to the embodiment. FIG. 2 illustrates a schematic exploded perspective view of earphone 100 illustrated in FIG. 1. FIG. 3 illustrates a schematic cross-sectional side view of a cross-section of earphone 100 illustrated in FIG. 1 when viewed in direction III, the cross-section being taken along a line from ear piece 101 through cable 105 to back cover 104. As illustrated in FIGs. 1 to 3, earphone 100 includes ear piece 101, port 102, loudspeaker 10, box 103, back cover 104, and cable 105.

Port 102 integrally includes main body 102a in the shape of a bottomed cylinder, and sound transmission tube 102b which extends from bottom wall 102aa of main body 102a. Ear piece 101 is a member to be inserted into an earhole of a user of earphone 100. Ear piece 101 is assembled into sound transmission tube 102b of port 102. Ear piece 101 has through hole 101a to be opened to the inside of an outer ear of the user. Through hole 101a is in commutation with sound transmission tube 102b. The outer surface of ear piece 101 may be an exposed surface made of a constitutional material for ear piece 101, or may be covered with a cushioning material having elasticity, such as rubber or sponge. Ear piece 101 itself may be formed with a cushioning material having elasticity.

Box 103 in the shape of a bottomed cylinder is assembled into main body 102a of port 102, and box 103 and main body 102a form accommodating space 108 therein. Accommodating space 108 is located between bottom wall 103a of box 103 and bottom wall 102aa of main body 102a, and is in commutation with sound transmission tube 102b. Loudspeaker 10 is disposed inside accommodating space 108 to radiate a sound toward sound transmission tube 102b. In other words, loudspeaker 10 is disposed such that diaphragm 11 thereof faces sound transmission tube 102b. The sound produced by diaphragm 11 of loudspeaker 10 passes through sound transmission tube 102b and through hole 101a of ear piece 101, and reaches to the ear of the user.

Back cover 104 in the shape of a bottomed cylinder is assembled into box 103 on the side opposite to port 102. Back cover 104 covers bottom wall 103a of box 103. Box 103 and back cover 104 form cable space 109 therein. Cable space 109 is located between bottom wall 103a of box 103 and the bottom wall of back cover 104, and is in communication with accommodating space 108. Back cover 104 includes insertion hole 104a through which cable 105 passes. Although two insertion holes 104a are disposed in the examples of FIGs. 2 and 3, one insertion hole may be disposed. Cable 105 electrically connects loudspeaker 10 and an apparatus or device to be connected to earphone 100. In other words, cable 105 is electrically connected to loudspeaker 10. Cable 105 extends from the outside of box 103 and back cover 104 through insertion hole 104a into cable space 109, and then into accommodating space 108 to be connected to loudspeaker 10. In other words, cable 105 extends from the inside of loudspeaker back space 110 (described later), which is formed inside accommodating space 108, to the outside.

Ear piece 101, port 102, box 103, and back cover 104 form the casing (also referred to as "housing") of the earphone. Ear piece 101, port 102, box 103, and back cover 104 are disposed in this order to be assembled into one another. In the present embodiment, ear piece 101, port 102, box 103, and back cover 104 are disposed coaxially with axis C. The shapes and arrangements of ear piece 101, port 102, box 103, and back cover 104 are not limited to those above, and may be any shape and any arrangement.

Accommodating space 108 is surrounded by bottom wall 102aa having a circular plate shape and side wall 102ab in the form of a cylinder of main body 102a of port 102 and bottom wall 103a having a circular plate shape and side wall 103b of box 103 in the form of a cylinder. Loudspeaker 10 is spaced from bottom wall 103a in the direction of axis C. Although axis C is approximately orthogonal to bottom wall 103a in the present embodiment, these may have any other relation. Such an arrangement allows formation of loudspeaker back space 110 between loudspeaker 10 and bottom wall 103a. In other words, bottom wall 103a forms loudspeaker back space 110 between bottom wall 103a and loudspeaker 10. Such a loudspeaker back space 110 is located behind loudspeaker 10 on the side opposite to diaphragm 11. Loudspeaker back space 110 is surrounded by loudspeaker 10, bottom wall 103a, and side wall 103b. Here, loudspeaker 10, loudspeaker back space 110, and cable 105 form sound output device 1. Bottom wall 103a is one example of a wall portion.

Loudspeaker 10 has diaphragm back space 31 in the back of diaphragm 11 on the side opposite to the sound radiation direction. Furthermore, loudspeaker 10 has sound hole 30. Sound hole 30 extends through loudspeaker 10 to allow communication of diaphragm back space 31 and loudspeaker back space 110. Sound hole 30 has first opening 30a opened to diaphragm back space 31 and second opening 30b opened to loudspeaker back space 110. In the present embodiment, sound hole 30 is a straight linear hole along axis C although any other form may be used. Specifically, the axial center of sound hole 30 is, but should not be limited to, axis C. Sound hole 30 may be inclined to axis C, or may contain a curved line shape, for example. Here, sound hole 30 is one example of a hole.

Loudspeaker 10 includes first damper 19 which covers second opening 30b. First damper 19 enables the outflow of the air inside sound hole 30 to loudspeaker back space 110 and the inflow of the air inside loudspeaker back space 110 to sound hole 30 while controlling the outflow and the inflow. Such a first damper 19 can reduce excessive vibration of the air inside sound hole 30, and prevent invasion of foreign substances into sound hole 30. First damper 19 is made of a porous material. Examples of the constitutional material for first damper 19 include sound damping clothes, materials having a plurality of through pores, mesh-like non-woven fabrics, and woven fabrics.

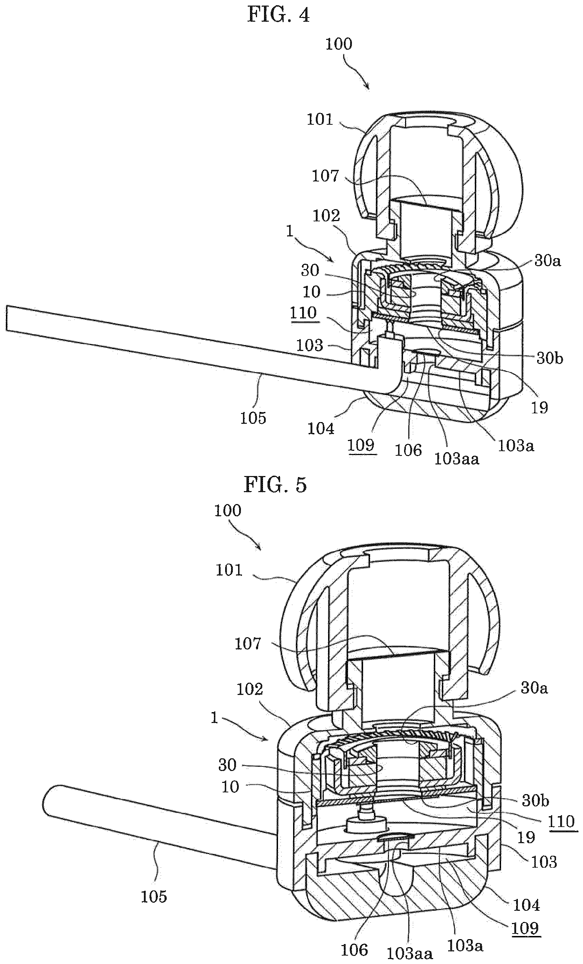

As illustrated in FIGs. 3 to 5, when viewed from first opening 30a toward second opening 30b, cable 105 inside loudspeaker back space 110 is disposed outside the region of sound hole 30, i.e., the region which sound hole 30 occupies. FIG. 4 is a schematic perspective cross-sectional view of earphone 100 illustrated in FIG. 1, where the same cross-section as that in FIG. 3 is cut out. FIG. 5 is a schematic perspective cross-sectional view of a cross-section of earphone 100 illustrated in FIG. 1 orthogonal to the cross-section of FIG. 3 when viewed in direction V, where the cross-section is cut out.

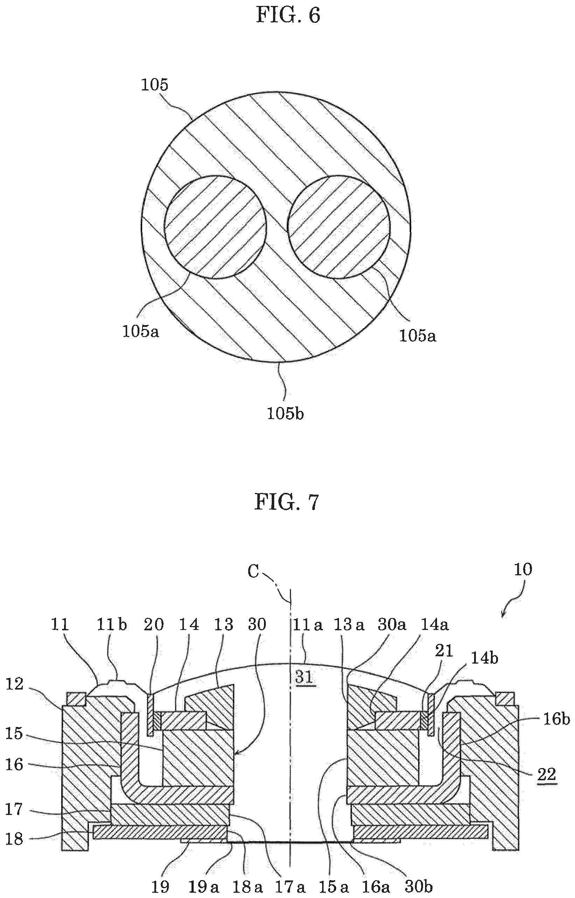

In the present embodiment, as illustrated in FIG. 6, cable 105 includes two conductive core wires 105a, and an electrically insulating outer coat 105b which covers two core wires 105a. The expression "cable 105 is located outside the region of sound hole 30" means that two core wires 105a and outer coat 105b are located outside the region of sound hole 30. For example, in the case where cable 105 includes one or more core wires 105a and outer coat 105b, all the core wires 105a and outer coat 105b are located outside the region of sound hole 30. In the case where cable 105 does not include outer coat 105b, all the core wires 105a are located outside the region of sound hole 30. FIG. 6 is a schematic cross-sectional view illustrating one example of a cross-sectional configuration of cable 105.

In the present embodiment, the region of sound hole 30 is also the region of sound hole 30 when sound hole 30 is viewed in the direction of axis C. In the case where sound hole 30 has a straight line shape, the expression "viewed from first opening 30a toward second opening 30b" may mean viewing in a direction along the straight line connecting the center of first opening 30a and the center of second opening 30b. In the case where sound hole 30 contains a curved line shape, the expression "viewed from first opening 30a toward second opening 30b" may mean viewing in a tangent direction of the line shape of sound hole 30 at second opening 30b. The region of sound hole 30 may be any of the region of the smallest or largest cross-section of sound hole 30, when viewed from first opening 30a toward second opening 30b, and the region of second opening 30b. For example, in the case where sound hole 30 has a shape which expands or narrows from first opening 30a toward second opening 30b, the region of sound hole 30 may be the region of second opening 30b.

As illustrated in FIGs. 2 to 5, wall hole 103aa which penetrates through bottom wall 103a is disposed in bottom wall 103a of box 103. Through wall hole 103aa, loudspeaker back space 110 is in communication with cable space 109. In other words, wall hole 103aa allows loudspeaker back space 110 to be in communication with the outside. Wall hole 103aa is opened facing second opening 30b of sound hole 30. Furthermore, bottom wall 103a includes second damper 106 which covers opening 103ab of wall hole 103aa. Second damper 106 has the same function as that of first damper 19, and reduces excessive vibration of the air inside loudspeaker back space 110 and prevents invasion of foreign substances into loudspeaker back space 110. The constitutional materials for second damper 106 may be the same materials as those listed in the description of first damper 19.

Sound transmission tube 102b of port 102 also includes third damper 107 which covers the opening of sound transmission tube 102b. Third damper 107 has the same function as that of first damper 19, and reduces excessive vibration of the air inside sound transmission tube 102b and prevents invasion of foreign substances into sound transmission tube 102b. The constitutional materials for third damper 107 may be the same materials as those listed in the description of first damper 19.

In the present embodiment, when viewed from first opening 30a toward second opening 30b, cable 105 inside loudspeaker back space 110 is disposed so as to be located outside the region of wall hole 103aa. The region of wall hole 103aa may be any of the region of the smallest or largest cross-section of wall hole 103aa, when viewed from first opening 30a toward second opening 30b, and the region of opening 103ab of wall hole 103aa to loudspeaker back space 110. In the case where wall hole 103aa has a cross-section significantly larger than that of sound hole 30, cable 105 may be located inside the region of wall hole 103aa.

As described above, in the present embodiment, when viewed from first opening 30a toward second opening 30b, cable 105 inside loudspeaker back space 110 is located outside the region of sound hole 30 and outside the region of wall hole 103aa. Cable 105 inside loudspeaker back space 110 is preferably located outside at least the region of sound hole 30. Cable 105 inside loudspeaker back space 110 may be located outside the region connecting second opening 30b of sound hole 30 and opening 103ab of wall hole 103aa.

When viewed from first opening 30a to second opening 30b, one of the region of sound hole 30 and the region of wall hole 103aa is contained within the other of the region of sound hole 30 and the region of wall hole 103aa. Because the cross-section of sound hole 30 is larger than that of wall hole 103aa in the present embodiment, the region of wall hole 103aa is contained within the region of sound hole 30. Furthermore, sound hole 30 and wall hole 103aa are coaxially disposed. However, for example, in the case where the cross-section of wall hole 103aa is larger than that of sound hole 30, the region of sound hole 30 may be contained within the region of wall hole 103aa. It is sufficient that wall hole 103aa faces second opening 30b of sound hole 30, and sound hole 30 and wall hole 103aa can have any relative positional relation other than that described above.

The opening area of opening 103ab of wall hole 103aa is preferably equal to or larger than that of second opening 30b of sound hole 30. In the case where first damper 19 is not disposed in second opening 30b and second damper 106 is not disposed in opening 103ab, the above expression "equal to or larger than" means that the opening area of opening 103ab itself is equal to or larger than that of second opening 30b itself. In the case where first damper 19 is disposed only in second opening 30b, the above expression "equal to or larger than" means that the opening area of opening 103ab itself is equal to or larger than that of first damper 19 inside second opening 30b. In the case where second damper 106 is disposed only in opening 103ab, the above expression "equal to or larger than" means that the opening area of second damper 106 inside opening 103ab is equal to or larger than that of second opening 30b itself. In the case where first damper 19 is disposed in second opening 30b and second damper 106 is disposed in opening 103ab, the above expression "equal to or larger than" means that the opening area of second damper 106 inside opening 103ab is equal to or larger than that of first damper 19 inside second opening 30b.

Cable space 109 is disposed between bottom wall 103a of box 103 and back cover 104. Cable space 109 is in communication with the outside of box 103 and back cover 104, that is, the outside of the housing of earphone 100 formed by these components. In the present embodiment, cable 105 extends along bottom wall 103a from the outside of box 103 and back cover 104 into cable space 109, although not limited to this. Furthermore, cable 105 changes the direction inside cable space 109 to extend in a direction along sound hole 30, and then extends through through hole 103ac disposed in bottom wall 103a into loudspeaker back space 110. Cable 105 extends in a direction along sound hole 30 inside loudspeaker back space 110 to be connected to loudspeaker 10. In other words, cable 105 extends in a direction along loudspeaker 10 to sound hole 30 inside loudspeaker back space 110.

The configuration of loudspeaker 10 will now be described with reference to FIGs. 3 and 7. FIG. 7 is an enlarged schematic cross-sectional side view of loudspeaker 10 illustrated in FIG. 3. Loudspeaker 10 includes casing 12, and diaphragm 11 attached to casing 12. Loudspeaker 10 vibrates diaphragm 11 to radiate a sound. Although loudspeaker 10 has an outer shape in the form of a cylinder in the present embodiment, loudspeaker 10 may have any other outer shape than this. Loudspeaker 10 includes diaphragm 11, casing 12, stopper 13, plate 14, magnet 15, yoke 16, spacer 17, circuit substrate 18, first damper 19, and voice coil 20.

Diaphragm 11 having a circular shape integrally includes diaphragm body 11a in the form of a circular plate, and diaphragm edge 11b having a ring shape and surrounding the outer circumference of diaphragm body 11a. Diaphragm edge 11b has flexibility, and diaphragm body 11a has rigidity larger than that of diaphragm edge 11b. The outer circumferential end of diaphragm edge 11b is fixed to casing 12. Diaphragm body 11a is connected to voice coil 20, and the vibration of voice coil 20 causes diaphragm edge 11b to deform and diaphragm body 11a to vibrate with diaphragm edge 11b.

Stopper 13, plate 14, magnet 15, yoke 16, spacer 17, circuit substrate 18, first damper 19, and voice coil 20 are disposed inside casing 12 having a cylindrical shape. Stopper 13, plate 14, magnet 15, yoke 16, spacer 17, and circuit substrate 18 are layered in this order in the direction of the axial center of casing 12, and are bonded to one another. In the present embodiment, the axial center of casing 12 is, but should not be limited to, axis C.

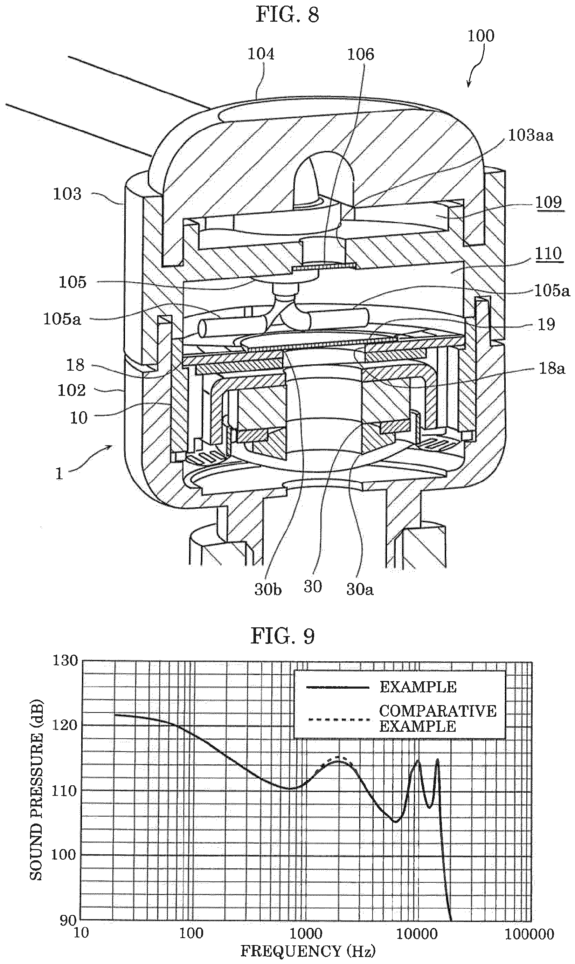

Circuit substrate 18 includes an electrical circuit and terminals not illustrated. Circuit substrate 18 converts an electric signal of a sound transmitted from the outside of loudspeaker 10 through cable 105, and transmits the converted signal to voice coil 20. Circuit substrate 18 has an annular platy shape including through hole 18a in the center thereof. Through hole 18a forms part of sound hole 30. As illustrated in FIG. 8, circuit substrate 18 is bonded to two core wires 105a of cable 105. Two core wires 105a bonded to circuit substrate 18 are located outside through hole 18a. FIG. 8 is a diagram of earphone 100 in FIG. 5 illustrated upside down. First damper 19 is attached to circuit substrate 18 so as to cover through hole 18a of circuit substrate 18 from the outside. First damper 19 is formed with a porous material at least in its region 19a facing through hole 18a.

Spacer 17 is disposed between circuit substrate 18 and yoke 16 to separate circuit substrate 18 and yoke 16 from each other. Spacer 17 has an annular platy shape including through hole 17a in the center. Through hole 17a forms part of sound hole 30. Spacer 17 may be omitted.

Yoke 16 is made of a magnetic material. Yoke 16 has a bottomed cylindrical shape, and includes a bottom of an annular platy shape and tubular portion 16b having a cylindrical shape. The bottom has through hole 16a in the center. Through hole 16a forms part of sound hole 30. Yoke 16 is disposed such that the bottom is in contact with spacer 17. Here, yoke 16 is one example of a second member.

Magnet 15 is a member having two magnetic poles as opposite poles. An example of magnet 15 is a permanent magnet. Magnet 15 has a cylindrical shape including through hole 15a in the center. Through hole 15a forms part of sound hole 30. Magnet 15 is coaxially disposed in contact with yoke 16 inside tubular portion 16b of yoke 16. A cylindrical gap is formed between the outer circumferential surface of magnet 15 and tubular portion 16b. A second magnetic pole, which is one of the two magnetic poles in magnet 15, is magnetically coupled to yoke 16.

Plate 14 is made of a magnetic material. Plate 14 is disposed inside tubular portion 16b of yoke 16 on magnet 15 opposite to the bottom of yoke 16. Plate 14 has an annular platy shape including through hole 14a in the center. Through hole 14a forms part of sound hole 30. Plate 14 is coaxially disposed in contact with magnet 15. Plate 14 is magnetically coupled to the first magnetic pole, which is the other of the two magnetic poles in magnet 15 and is opposite to the second magnetic pole. Tubular portion 16b of yoke 16 is disposed externally to outer circumferential end 14b of plate 14, specifically, on the outer side in the diameter direction of outer circumferential end 14b, and faces outer circumferential end 14b. Magnetic gap 22 as a gap is formed between outer circumferential end 14b and the inner circumferential surface of tubular portion 16b. Within magnetic gap 22, a magnetic field is formed between outer circumferential end 14b and tubular portion 16b from one of outer circumferential end 14b and tubular portion 16b toward the other. Here, outer circumferential end 14b of plate 14 is one example of the first facing portion of the first member, and tubular portion 16b of yoke 16 is one example of the second facing portion of the second member. Such plate 14, magnet 15, and yoke 16 described above form a magnetic circuit through which a magnetic flux circulates.

Stopper 13 is disposed on plate 14 and magnet 15 to fix plate 14 to magnet 15. Stopper 13 has an annular shape including through hole 13a in the center. Through hole 13a forms part of sound hole 30. The deposition of stopper 13 reduces the volume of diaphragm back space 31, which is the space between plate 14 and diaphragm body 11a. Because the volume of diaphragm back space 31 is associated with the sound quality of loudspeaker 10, stopper 13 is also disposed to control the volume of diaphragm back space 31.

Voice coil 20 is formed with a wire wound into a cylindrical shape. Voice coil 20 is disposed inside magnetic gap 22 to encircle outer circumferential end 14b of plate 14 from the outside. Voice coil 20 is disposed coaxially with plate 14 and yoke 16 at an interval therefrom. Voice coil 20 is bonded to diaphragm body 11a of diaphragm 11. Voice coil 20 is electrically connected to circuit substrate 18. When an electric signal is input to voice coil 20, voice coil 20 reciprocally vibrates in the direction of axis C due to the action of the magnetic field inside magnetic gap 22. The vibration of voice coil 20 causes the vibration of diaphragm 11 and thus a change in pressure of the air on the outer and inner surfaces of diaphragm 11, thereby generating a sound wave. At this time, diaphragm 11 radiates the sound wave from the outer surface opposite to diaphragm back space 31.

Stopper 13, plate 14, magnet 15, yoke 16, spacer 17, and circuit substrate 18, which are assembled into one another as described above, together form sound hole 30 which penetrates through this assembly. In other words, sound hole 30 penetrates through stopper 13, plate 14, magnet 15, yoke 16, spacer 17, and circuit substrate 18. Such stopper 13, plate 14, magnet 15, yoke 16, spacer 17, and circuit substrate 18 surround sound hole 30. Furthermore, voice coil 20 also surrounds sound hole 30. Through hole 13a of stopper 13 forms first opening 30a of sound hole 30, and through hole 18a of circuit substrate 18 forms second opening 30b of sound hole 30.

Loudspeaker 10 includes magnetic fluid 21. Magnetic fluid 21 is filled between voice coil 20 and outer circumferential end 14b of plate 14 inside magnetic gap 22. Magnetic fluid 21 is filled across the entire outer circumferential end 14b, and is distributed in an annular shape. Magnetic fluid 21 is a fluid containing a magnetic material. Examples of magnetic fluid 21 include a magnetic colloid solution comprising ferromagnetic nanoparticles (for example, diameter: about 10 nm) of magnetite or manganese zinc ferrite, a surfactant which covers the surfaces of the ferromagnetic nanoparticles, and a base solution such as water or oil. In spite of a liquid, magnetic fluid 21 has magnetism, and is attracted to magnets. Magnetic fluid 21 may be disposed between voice coil 20 and tubular portion 16b of yoke 16, or may be disposed between voice coil 20 and tubular portion 16b of yoke 16 and between voice coil 20 and plate 14. In other words, magnetic fluid 21 may be disposed between voice coil 20 and at least one of tubular portion 16b of yoke 16 and outer circumferential end 14b of plate 14.

Such a magnetic fluid 21 is kept between voice coil 20 and outer circumferential end 14b of plate 14 by the magnetic force generated by the magnetic field inside magnetic gap 22 to form a fluid O-ring. Voice coil 20 is held by magnetic fluid 21 and plate 14 due to the magnetic force from magnetic fluid 21, thereby maintaining the position of voice coil 20 with respect to outer circumferential end 14b. Magnetic fluid 21 functions as a fluid O-ring to seal the space between voice coil 20 and outer circumferential end 14b. Thus, the space on the rear surface side with respect to diaphragm edge 11b, which the sound wave is generated, is secluded from diaphragm back space 31 by magnetic fluid 21. Such a configuration can prevent the leakage of the air inside the space on the rear surface side with respect to diaphragm edge 11b, which the sound wave is generated, to diaphragm back space 31, thereby preventing a reduction in sound pressure of loudspeaker 10.

Magnetic fluid 21 has center retention force. For this reason, even in the case where voice coil 20 vibrates at a large amplitude, due to its center retention force, magnetic fluid 21 enables stable vibration of diaphragm 11 and voice coil 20 without bringing diaphragm 11 and voice coil 20 into contact with plate 14 and yoke 16.

The operation of earphone 100 according to the embodiment will now be described with reference to FIGs. 3 and 7. Circuit substrate 18 of loudspeaker 10 converts an electric signal of a sound transmitted through cable 105, and outputs the signal to voice coil 20. Voice coil 20 vibrates in the direction of axis C according to the received signal to vibrate diaphragm 11. Diaphragm 11 changes the pressure of the air on the outer surface and the inner surface thereof, and radiates the sound wave toward sound transmission tube 102b. The sound wave radiated to sound transmission tube 102b is radiated from through hole 101a of ear piece 101 into the outer ear of the user of earphone 100.

The vibration of diaphragm 11 in the direction of axis C results in the vibration of the air inside diaphragm back space 31 and sound hole 30 to increase or reduce the pressure. The end of diaphragm back space 31 is sealed by magnetic fluid 21. As a result of the increase or reduction in pressure above, the air passes through first damper 19, and reciprocally moves between sound hole 30 and loudspeaker back space 110. The outflow of the air from sound hole 30 to loudspeaker back space 110 forms a jet flow from second opening 30b of sound hole 30 toward wall hole 103aa when the air passes through a plurality of pores of first damper 19. The jet flow smoothly flows toward wall hole 103aa without interfering with cable 105, flows through wall hole 103aa into cable space 109, and flows from insertion hole 104a of back cover 104 to the outside.

When the jet flow generates in first damper 19, the reaction force opposite to the direction of the jet flow flowing is generated in first damper 19. The parameters for the reaction force are the jet rate of air, the air density inside sound hole 30, and the opening area of first damper 19. The jet rate of air depends on the compression pressure of the air inside sound hole 30. For example, in the case where cable 105 is disposed so as to block, traverse, or be near the opening of first damper 19, the compression pressure of the air, that is, the jet rate of air varies according to the distance between cable 105 and first damper 19. Thus, the reaction force received by first damper 19 varies. A change in reaction force in first damper 19 affects the vibration of diaphragm 11 through the air inside diaphragm back space 31 and sound hole 30. For this reason, the sound pressure generated by diaphragm 11 cannot reach a desired sound pressure in some cases. In contrast, cable 105 is disposed as described above with respect to sound hole 30 and wall hole 103aa in the present embodiment, therefore preventing the interreference of the jet flow from cable 105. Thus, the sound pressure generated by diaphragm 11 can achieve a desired sound pressure.

For example, FIG. 9 illustrates the results of comparison of Example of earphone 100 according to the embodiment to Comparative Example of an earphone having a configuration in which cable 105 is disposed near the front of second opening 30b of sound hole 30. FIG. 9 is a diagram illustrating the sound pressure frequency properties in Example and Comparative Example. In the graph of FIG. 9, the solid line represents the relation between the sound pressure and the frequency in Example, and the dashed line represents the relation between the sound pressure and the frequency in Comparative Example. As illustrated in FIG. 9, the relation between the sound pressure and the frequency in Example is different from that in Comparative Example.

In the earphone, usually, while the sound pressure at low frequency increases, the sound pressure at high frequency decreases due to influences of the mass of air on the outer surface or the front surface of the diaphragm. When the user wears such an earphone and actually listens, the user clearly hears only low-pitched sounds, and hears muffled high-pitched sounds without clarity such as differences between consonants of real voices and those between individuals. In particular, sounds in the frequency bandwidth of 1 to 6 kHz are more likely to muffle. Such a tendency is determined by the relative difference in sound pressure between the sound pressure at low frequency and the sound pressure in the frequency bandwidth above. Specifically, a larger difference results in significant muffled sounds. Thus, better sound quality is obtained as the sound pressure in the frequency bandwidth above is closer to the sound pressure at low frequency.

As described above, in sound output device 1 according to the embodiment, when viewed from first opening 30a of sound hole 30 toward second opening 30b, cable 105 inside loudspeaker back space 110 is disposed outside the region of sound hole 30. According to the aspect above, the vibration of diaphragm 11 in loudspeaker 10 causes the air inside sound hole 30 to vibrate and repeatedly come in and out of loudspeaker back space 110. Because cable 105 inside loudspeaker back space 110 is disposed outside the region of sound hole 30, the outflow air into loudspeaker back space 110 is allowed while the interference of the air with cable 105 is prevented. Thereby, a change in pressure of the air inside sound hole 30 caused by the interference of the outflow air with cable 105 is prevented, enabling a reduction in influences over the vibration of diaphragm 11 by the change in pressure. Accordingly, sound output device 1 can have improved sound pressure frequency properties.

When sound output device 1 according to the embodiment is viewed from first opening 30a of sound hole 30 toward second opening 30b, cable 105 inside loudspeaker back space 110 is disposed outside the region of wall hole 103aa of bottom wall 103a which forms loudspeaker back space 110 with loudspeaker 10. According to this aspect, the outflow air from sound hole 30 into loudspeaker back space 110 smoothly flows through wall hole 103aa to the outside of loudspeaker back space 110. Thus, the change in pressure of the air inside sound hole 30, which is caused by the interference of the outflow air into loudspeaker back space 110, is prevented.

When sound output device 1 according to the embodiment is viewed from first opening 30a of sound hole 30 toward second opening 30b, one of the region of sound hole 30 and the region of wall hole 103aa is contained within the other of the region of sound hole 30 and the region of wall hole 103aa. According to this aspect, the air can efficiently flow from sound hole 30 to wall hole 103aa. Thus, the interference of the outflow air from sound hole 30 to loudspeaker back space 110 is prevented.

In sound output device 1 according to the embodiment, cable 105 is disposed inside loudspeaker back space 110 so as to extend from loudspeaker 10 in the direction along sound hole 30. According to this aspect, cable 105 inside loudspeaker back space 110 is readily disposed outside the region of sound hole 30. Moreover, the region inside loudspeaker back space 110 where cable 105 occupies can be reduced, thus increasing the volume of the air inside loudspeaker back space 110. As a result, the variation in pressure of loudspeaker back space 110 during vibration of the air inside sound hole 30 is reduced, thus reducing influences over the air inside sound hole 30 by the air inside loudspeaker back space 110.

In sound output device 1 according to the embodiment, sound hole 30 is formed so as to penetrate through plate 14, yoke 16, and magnet 15 of loudspeaker 10. According to this aspect, an efficient arrangement of sound hole 30, plate 14, yoke 16, magnet 15, and voice coil 20 is enabled, resulting in a size reduction of loudspeaker 10.

In sound output device 1 according to the embodiment, loudspeaker 10 includes magnetic fluid 21 which is disposed between voice coil 20 and at least one of outer circumferential end 14b of plate 14 and tubular portion 16b of yoke 16. According to this aspect, magnetic fluid 21 stably holds voice coil 20, which vibrates, with respect to at least one of plate 14 and yoke 16. Thus, the sound quality of loudspeaker 10 can be improved.

In sound output device 1 according to the embodiment, sound hole 30 is formed so as to penetrate through circuit substrate 18 of loudspeaker 10. According to this aspect, an efficient arrangement of circuit substrate 18 in loudspeaker 10 is enabled, resulting in a size reduction of loudspeaker 10.

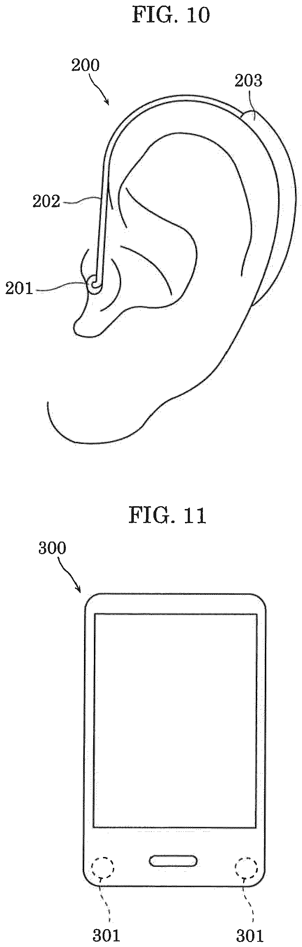

An example of applications of sound output device 1 according to the embodiment will be described. Examples of applications of sound output device 1 according to the embodiment include hearing aid 200 illustrated in FIG. 10 other than earphone 100 illustrated in FIG. 1. FIG. 10 is a schematic view illustrating one example of a hearing aid including sound output device 1 according to the embodiment. Hearing aid 200 includes receiver 201, hearing aid body 202, and lead tube 203. Receiver 201 has a configuration according to the configuration of ear piece 101, port 102, and sound output device 1 in earphone 100.

Other examples of applications of sound output device 1 according to the embodiment include mobile terminal device 300 illustrated in FIG. 11. FIG. 11 is a schematic view illustrating one example of a mobile terminal device including sound output device 1 according to the embodiment. Sound output device 1 is used as external loudspeaker 301 of mobile terminal device 300 illustrated in FIG. 11. Although mobile terminal device 300 is a smartphone in the example illustrated in FIG. 11, any mobile terminal device such as a mobile phone, a tablet terminal, or a smart watch can be used.

Moreover, sound output device 1 according to the embodiment may be used in any apparatus including a loudspeaker other than the apparatuses above.

As above, the embodiments have been described as examples of the technique according to the present disclosure. However, the technique according to the present disclosure is not limited to that described above, and can also be used in embodiments appropriately changed, replaced, added, or omitted. Moreover, the components described in the embodiments can also be combined into new embodiments.

### INDUSTRIAL APPLICABILITY

As described above, the technique according to the present disclosure is useful for apparatuses including loudspeakers.

### REFERENCE MARKS IN THE DRAWINGS

- 1: sound output device
- 10: loudspeaker
- 11: diaphragm
- 14: plate (first member)
- 14b: outer circumferential end (first facing portion)
- 15: magnet
- 16: yoke (second member)
- 16b: tubular portion (second facing portion)
- 18: circuit substrate
- 19: first damper
- 20: voice coil
- 21: magnetic fluid
- 30: sound hole (hole)
- 30a: first opening
- 30b: second opening
- 31: diaphragm back space
- 100: earphone
- 105: cable
- 108: accommodating space
- 109: cable space
- 110: loudspeaker back space
- 200: hearing aid
- 300: mobile terminal device

## Claims

1. A sound output device, comprising:
a loudspeaker including a diaphragm;
a loudspeaker back space located behind the loudspeaker on a side opposite to the diaphragm; and
a cable which is electrically connected to the loudspeaker and extends from an inside of the loudspeaker back space to an outside,
wherein the loudspeaker includes:
a diaphragm back space located in a back of the diaphragm on a side opposite to a sound radiating direction; and
a hole having a first opening opened to the diaphragm back space and a second opening opened to the loudspeaker back space, and
when viewed from the first opening toward the second opening, the cable inside the loudspeaker back space is disposed outside a region of the hole.

2. The sound output device according to claim 1, further comprising:
a wall which forms the loudspeaker back space with the loudspeaker,
wherein the wall has a wall hole which is opened facing the second opening and through which the loudspeaker back space is in communication with the outside, and
when viewed from the first opening toward the second opening, the cable is disposed outside a region of the wall hole.

3. The sound output device according to claim 1 or 2,
wherein when viewed from the first opening toward the second opening, one of the region of the hole and the region of the wall hole is contained within the other of the region of the hole and the region of the wall hole.

4. The sound output device according to any one of claims 1 to 3,
wherein the cable is disposed inside the loudspeaker back space so as to extend from the loudspeaker in a direction along the hole.

5. The sound output device according to any one of claims 1 to 4,
wherein the loudspeaker includes:
a magnet which surrounds the hole;
a first member which surrounds the hole and is magnetically coupled to a first magnetic pole of the magnet;
a second member which surrounds the hole and is magnetically coupled to a second magnetic pole of the magnet; and
a voice coil which surrounds the hole and is connected to the diaphragm,
wherein the voice coil is disposed in a magnetic gap defined between a first facing portion of the first member and a second facing portion of the second member which faces the first facing portion.

6. The sound output device according to claim 5,
wherein the loudspeaker further includes a magnetic fluid disposed between the voice coil and at least one of the first facing portion and the second facing portion.

7. The sound output device according to claim 5 or 6,
wherein the loudspeaker further includes a circuit substrate which surrounds the hole and is electrically connected to the voice coil and the cable.

8. An earphone comprising the sound output device according to any one of claims 1 to 7.

9. A hearing aid comprising the sound output device according to any one of claims 1 to 7.

10. A mobile terminal device comprising the sound output device according to any one of claims 1 to 7.
